Europäisches Patentamt

European Patent Office

Office européen des brevets

(11) Veröffentlichungsnummer: **0 234 446**
**A1**

## (12) EUROPÄISCHE PATENTANMELDUNG

(21) Anmeldenummer: 87102058.2

(22) Anmeldetag: 13.02.87

(51) Int. Cl.⁴: **G05D 3/20**

(30) Priorität: **20.02.86 DE 3605442**

(43) Veröffentlichungstag der Anmeldung:
**02.09.87 Patentblatt 87/36**

(84) Benannte Vertragsstaaten:
**FR GB**

(71) Anmelder: **DORNIER SYSTEM GmbH**
**Postfach 1360**
**D-7990 Friedrichshafen(DE)**

(72) Erfinder: **Metzger, Klaus, Dr. Ing.**
**Saarstrasse 18**
**D-7415 Wannweil(DE)**
Erfinder: **Kunz, Wunnibald, Dipl.-Ing.**
**Ifenstrasse 4**
**D-7990 Friedrichshafen(DE)**
Erfinder: **Weiss, Gerhard, Dipl.-Ing.**
**Schulstrasse 8**
**D-7997 Immenstaad(DE)**

(74) Vertreter: **Landsmann, Ralf, Dipl.-Ing.**
**DORNIER GMBH - Patentabteilung - Kleeweg**
**3**
**D-7990 Friedrichshafen 1(DE)**

(54) **Vorrichtung zur diskreten digitalen Lageregelung.**

(57) Die Vorrichtung zur diskreten digitalen Lageregelung eines elektrischen Antriebs mit Regelkreis durch Kombination diskreter digitaler Bausteine besteht aus Istwertzähler, Vor-und Rückwärts-Geschwindigkeitszähler, Vor-und Rückwärts-Geschwindigkeitsspeicher, Taktpuls-Generator, Vor-und Rückwärts-Volladdierer, Komparator und Sollwertspeicher. Die Dämpfung des Regelkreises ist durch einen modizifierten und durch geschwindigkeitsabhängige Addition zum Soll-und Istwert digitalisierten, stabil und als Dreipunktregler arbeitenden Komparator (K) über die Frequenz des Taktpuls-Generators (TIG) einstellbar.

0 234 446

1a

## Vorrichtung zur diskreten digitalen Lageregelung

Die Erfindung betrifft eine Vorrichtung zur diskreten digitalisierten Lageregelung eines elektrischen Antriebs mit Regelkreis nach dem Oberbegriff von Anspruch 1.

Regelsysteme werden meist mit digitalen Rechnern oder in konventioneller Analogtechnik realisiert. Die modernen rechnergeführten Systeme zeichnen sich zwar durch Leistungsfähigkeit und Vielseitigkeit aus, erfordern aber auch für einfache Aufgaben einen beträchtlichen Mindestaufwand - (Rechnersystem mit allen erforderlichen Komponenten, wie A/D-Wandler und D/A-Umsetzer u.a.) und unterliegen stets der Zeit-Quantisierung (Abtasten, Rechenzeit), wobei eine höhere Schnelligkeit einen höheren Aufwand bedingt. Siehe hierzu "Digitale Regelsysteme", R. Isermann, Springer-Verlag - (1977) und "Regelung mit dem Prozeßrechner - (DDC)", W. Latzel, BI-Wissenschaftsverlag (1977). Die Analogtechnik arbeitet in Zeit und Amplitude kontinuierlich und erledigt auch mittlere Aufgaben mit relativ geringem Aufwand (direkte Verarbeitung der meist noch analogen Meß-und Steuersignale). Nachteilig wirken sich hierbei die unvermeidlichen Driften und Störungen sowie die schlechte Reproduzierbarkeit bei der Serienfertigung aus.

Aufgabe der Erfindung ist es, eine Vorrichtung zu schaffen, mit welcher eine digitale Lageregelung durch auf engstem Raum bzw. kleinster Fläche angeordnete Bauteile ein gefordertes Regelverhalten für einen elektrischen Antrieb gewährleistet wird.

Erfindungsgemäß wird die gestellte Aufgabe durch die kennzeichnenden Merkmale des Anspruchs 1 gelöst. Vorteilhafte Weiterbildungen ergeben sich aus dem Unteranspruch.

Der Vorteil der Erfindung besteht darin, daß die von einem elektrischen Antrieb, z.B. einem Stellmotor gelieferte Information über eine Bewegung um ein Inkrement jeweils einen Vor-oder Rückwärtspuls liefert. Die Anordnung und Zusammenschaltung einzelner an sich bekannter Bauteile auf einen einzigen monolithischen Baustein, ergibt im Vergleich zu herkömmlichen µP-Reglern eine kleine, leichte und kostengünstige Bauweise und im Vergleich zu herkömmlichen Analogrechnern eine hohe Störfestigkeit und hohe Langzeitstabilität. Von einem durch geschwindigkeitsabhängige Additionen der vom Antrieb gelieferten Informationen zum Soll-und Istwert modifizierten Dreipunktregler ausgehend, werden aus einem Istwertzähler heraus aktuelle Istwerte ermittelt. Parallel dazu werden in einem Vorwärts-Geschwindigkeitszähler die vom Antrieb ausgehenden Vorwärtspulse oder im Rückwärts-Geschwindigkeitszähler die ebenfalls vom Antrieb ausgehenden Rückwärtspulse über eine bestimmte Zeit gezählt. Diese Zeit wird durch den vor den Vorwärts-Geschwindigkeitszähler und -speicher und Rückwärts-Geschwindigkeitsszähler und -speicher geschalteten Taktpuls-Generator bestimmt, wobei mit der Vorderflanke des Taktpulses der Stand der beiden Geschwindigkeitszähler in die beiden Geschwindigkeitsspeicher übernommen wird. Mit der Hinterflanke werden die beiden Zähler unmittelbar danach auf Null gesetzt und beginnen von neuem zu zählen. Der Inhalt der Geschwindigkeitsspeicher ist dann ein Maß für die Geschwindigkeit in der jeweiligen Richtung.

Der Inhalt der beiden Geschwindigkeitsspeicher wird logisch in den beiden Addierstufen (Vorwärts-und Rückwärts-Volladdierer) zum Ist-bzw. Sollwert addiert. Die so korrigierten Soll-und Istwerte werden anschliessend in einem zwischen Vorwärts-Volladdierer und Rückwärts-Volladdierer angeordneten Komparator verglichen, wobei die daraus resultierenden Signale die Kommandos Ein/Aus und Rückwärts/Vorwärts für den Antrieb, z.B. den Stellmotor sind.

Durch die Addition der geschwindigkeitsabhängigen Anteile erhält der Regelkreis eine Dämpfung, die ihn stabil macht und über die Frequenz des Taktpuls-Generators in weiten Grenzen veränderbar ist. Alle dazu verwendeten Komponenten sind als diskrete digitale Bauteile bzw. Bausteine bekannt und handelsüblich und können deshalb in einem einzigen IC-Baustein integriert werden.

Der erfindungsgemäße digitale Regler stellt somit einen Kompromiß zwischen beiden Techniken (digital/analog) dar, indem damit die Vorteile der Digitaltechnik (Störunempfindlichkeit, Driftfreiheit, Reproduzierbarkeit u.a.) mit wichtigen Vorzügen der Analogtechnik (quasi zeitkontinuierliches Arbeiten, geringer Aufwand durch unmittelbare Verarbeitung der Meß-und Steuersignale) kombiniert werden. Der Regler ersetzt störempfindliche analoge Bauteile, wie Stellungs-und Geschwindigkeitsgeber oder Spannungskomparator durch unkritische, - schnelle digitale Standard-Schaltkreise und bildet daraus praktisch zeitkontinuierlich und in der geforderten Genauigkeit die Ausgangssignale durch kombinatorische Verknüpfungen. Lediglich die Geschwindigkeitsrückführung (Vorhalt) arbeitet dabei prinzipbedingt in zeitquantisierter Form, was aber die Funktion im Anwendungsfall nicht beeinträchtigt.

Folgend ist ein Ausführungsbeispiel beschrieben und durch eine Skizze erläutert.

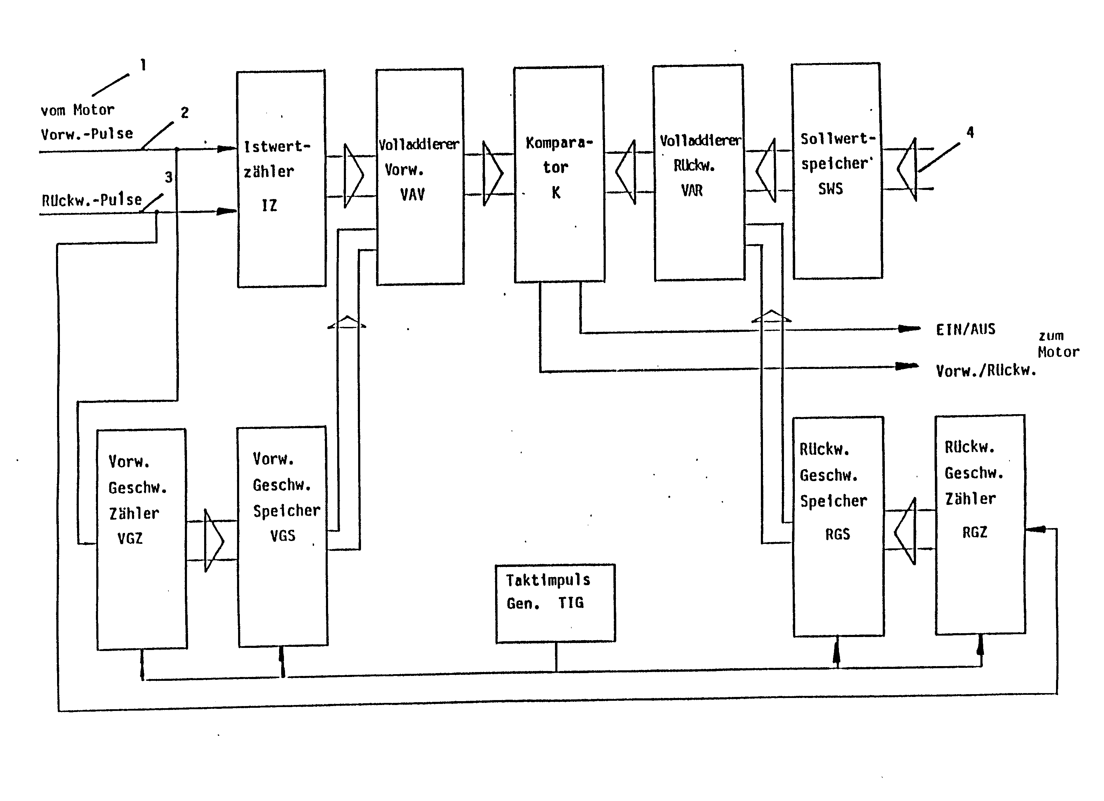

Die Figur zeigt eine Vorrichtung zur Lageregelung im Prinzip. Die von einem Antrieb, z.B. einem Motor 1 (nicht näher dargestellt) ausgehenden Vor- und Rückwärtspulse 2, 3 gelangen zunächst in einem Istwertzähler IZ, dem ein Vorwärts-Volladdierer VAV angeschlossen ist und welcher mit einem Komparator K in Verbindung steht. Die Vor-und Rückwärtspulse 2, 3 werden vor Eingang in den Istwertzähler IZ abgezweigt. Davon gelangen die Vorwärtspulse 2 in einen Vorwärts-Geschwindigkeitszähler VGZ und von dort in einen nachgeordneten Vorwärts-Geschwindigkeitsspeicher VGS, und von diesen über den Vorwärts-Volladdierer VAV in den Komparator K. Die Rückwärtspulse 3 werden über einen Rückwärts-Geschwindigkeitszähler RGZ und einen Rückwärts-Geschwindigkeitsspeicher RGS sowie einen Rückwärts-Volladdierer VAR in den Komparator K geleitet. Ein in einem Sollwertspeicher SWS eingegebener Sollwert 4 wird zum Vergleich über den Rückwärts-Volladdierer VAR in den Komparator K gegeben. Einem aus dem Istwertzähler IZ ermittelten aktuellen Istwert werden parallel dazu im Vorwärts-Geschwindigkeitszähler VGZ die Vorwärtspulse oder im Rückwärts-Geschwindigkeitszähler RGZ die Rückwärtspulse über eine bestimmte Zeit gezählt. Diese Zeit ist durch einen zwischen den Vorwärts-Geschwindigkeitszähler VGZ und Vorwärts-Geschwindigkeitsspeicher VGS sowie den Rückwärts-Geschwindigkeitsspeicher RGS und Rückwärts-Geschwindigkeitszähler RGZ angeordneten Taktpuls-Generator TIG bestimmt. Dabei wird mit der vorderen Flanke des Taktpulses der Stand der beiden Geschwindigkeitszähler VGZ und RGZ in die beiden Geschwindigkeitsspeicher VGS und RGS übernommen. Mit der anderen (hinteren) Flanke werden unmittelbar danach diese Zähler auf Null gesetzt und beginnen neu zu zählen. Der Inhalt der Geschwindigkeitsspeicher VGS und RGS ist somit ein Maß für die Geschwindigkeit in der jeweiligen Richtung. Der Inhalt der Geschwindigkeitsspeicher VGS und RGS wird in den Addierstufen VAV und VAR zum Istwert bzw. Sollwert logisch richtig addiert bzw. korrigiert und im Komparator K verglichen. Sie sind dann die Kommandos für Ein-/Aus- und Rückwärts-/Vorwärts-Schaltung des Antriebs bzw. Motors.

Der Regelkreis wird durch Addition der geschwindigkeitsabhängigen Anteile gedämpft. Dadurch bleibt er stabil und über die Frequenz des Taktpuls-Generators in weiten Grenzen veränderbar.

Eine weitere vorteilhafte, hier nicht näher skizzierte Ausbildung der Erfindung ergibt sich, wenn der Komparator K durch einen Subtrahierer ersetzt wird.

Das Stell-oder Ausgangssignal entspricht dann nicht mehr einem Dreipunktregler, sondern mehr dem eines stufigen PD-Reglers.

Der Realisierungsaufwand ist geringfügig höher, jedoch verbessert sich auch das Regelungsverhalten über den ganzen Frequenzbereich. Auch der Energieverbrauch und das EMV-Verhalten läßt sich so verbessern.

## Ansprüche

1. Vorrichtung zur diskreten digitalen Lageregelung eines elektrischen Antriebs mit Regelkreis durch Kombination diskreter digitaler Bauteile, bestehend aus Istwertzähler, Vor-und Rückwärts-Geschwindigkeitszähler, Vor-und Rückwärts-Geschwindigkeitsspeicher, Taktpuls-Generator, Vor-und Rückwärts-Volladdierer, Komparator und Sollwertspeicher, **dadurch gekennzeichnet**, daß durch einen modifizierten und durch geschwindigkeitsabhängige Addition zum Soll-und Istwert digitalisierten, stabil und als Dreipunktregler arbeitenden Komparator (K) die Dämpfung des Regelkreises über die Frequenz des Taktpuls-Generators (TIG) einstellbar ist.

2. Vorrichtung nach Anspruch 1, dadurch gekennzeichnet, daß die Bauteile auf einem einzigen monolithischen Baustein angeordnet sind.

3. Vorrichtung nach Anspruch 1, dadurch gekennzeichnet, daß der Komparator (K) durch einen Subtrahierer ersetzt wird, und das Stellsignal nicht mehr nur "Ein -Aus", sondern ein stufiges proportionales Signal ergibt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | INSTRUMENTS AND EXPERIMENTAL TECHNIQUES, Band 24, Nr. 3, Teil 1, Mai-Juni 1981, Seiten 668-671, New York, US; V.N. GOVORUN et al.: "A precision platform digital control system" * Abschnitte 1, 3; Figuren 1, 3 * | 1-3 | G 05 D 3/20 |
| | --- | | |
| A | IEEE TRANSACTIONS ON INDUSTRY APPLICATIONS, Band IA-20, Nr. 6, November-Dezember 1984, Seiten 1473-1481, New York, US; P. MOTA et al.: "Digital position servo system: A state variable feedback system" * Seite 1473, Abschnitte I, II; Seite 1474, Figuren 1, 2 * | 1 | |
| | --- | | RECHERCHIERTE SACHGEBIETE (Int. Cl.4) |
| A | DE-A-1 563 894 (VEB KOMBINAT ELEKTROPROJEKT UND ANLAGENBAU BERLIN) * Seite 4, Zeile 10 - Seite 8, Zeile 6; Figur 1 * | 1 | G 05 D 3/00 |
| | ----- | | |

Der vorliegende Recherchenbericht wurde für alle Patentansprüche erstellt.

| Recherchenort BERLIN | Abschlußdatum der Recherche 06-05-1987 | Prüfer BEITNER M.J.J.B. |
|---|---|---|